(19) Europäisches Patentamt
European Patent Office
Office européen des brevets

(11) **EP 1 431 717 A1**

(12) **EUROPEAN PATENT APPLICATION**
published in accordance with Art. 158(3) EPC

(43) Date of publication:
23.06.2004 Bulletin 2004/26

(51) Int Cl.⁷: **G01F 1/68**

(21) Application number: 02800274.9

(86) International application number:
**PCT/JP2002/010087**

(22) Date of filing: 27.09.2002

(87) International publication number:
**WO 2003/029759 (10.04.2003 Gazette 2003/15)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: 28.09.2001 JP 2001303502

(71) Applicant: **Yamatake Corporation
Tokyo 150-8316 (JP)**

(72) Inventors:
• **OOISHI, Yasuharu c/o Yamatake Corporation
Tokyo 150-8316 (JP)**
• **SEO, Masaki c/o Yamatake Corporation
Tokyo 150-8316 (JP)**
• **NUKUI, Kazumitsu c/o Tokyo Gas Co., Ltd.
Tokyo 105-8527 (JP)**
• **KOMAKI, Mitsunori c/o Tokyo Gas Co., Ltd.
Tokyo 105-8527 (JP)**
• **TASHIRO, Ken c/o Tokyo Gas Co., Ltd.
Tokyo 105-8527 (JP)**

(74) Representative: **Modiano, Guido, Dr.-Ing. et al
Modiano, Josif, Pisanty & Staub,
Baaderstrasse 3
80469 München (DE)**

(54) **FLOW RATE MEASURING INSTRUMENT**

(57) A bridge circuit (1) includes a heating resistor (RH), a reference resistor (RR), and a pair of fixed resistors (R1, R2), one of which is series-connected to the heating resistor and the other series-connected to the reference resistor. Drive voltage for the bridge circuit (1) is controlled to bring the bridge circuit (1) to equilibrium. Ambient temperature (TQ) affecting the reference resistor is calculated on the basis of the drive voltage for this bridge circuit and bridge output voltage thereof. Flow rate obtained by a sensor body is corrected on the basis of this ambient temperature and a rate of change of the sensor body per unit temperature (ΔP) corresponding to the flow rate. Thus, the flow rate of fluid is measured with high accuracy, without being affected by the ambient temperature or the flow rate.

FIG. 2

**Description**

**Technical Field**

The present invention relates to a flowmeter of simple structure which can measure the flow rate of fluid with high accuracy, without being affected by ambient temperature or the flow rate.

**Background Art**

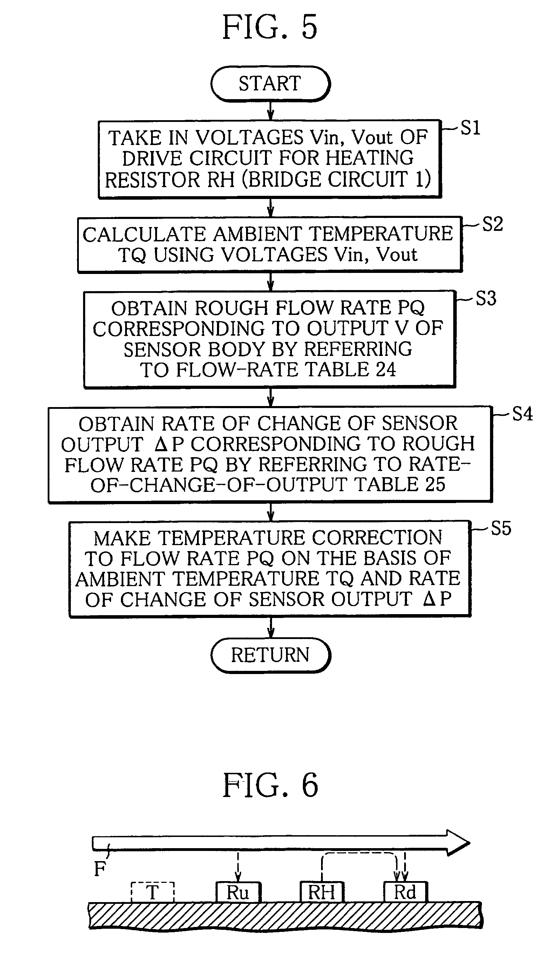

A flow sensor used as a thermal flow meter has basically a device structure as shown in FIG. 6, for example, in which a pair of temperature-measuring resistors Ru, Rd are arranged on a silicon base in the direction F of flow of fluid, with a heating resistor RH between, independently from the heating resistor RH. Using the fact that the degree of dispersion of heat emitted from the heating resistor RH (temperature distribution) varies depending on the flow of fluid, the flow rate of the fluid is detected from change in resistance value of the measuring resistors Ru, Rd caused by heat.

Specifically, in the flow sensor of the above-described structure, heat emitted from the heating resistor RH is given solely to the downstream temperature-measuring resistor Rd in a manner depending on the flow rate. As a result, the change of resistance value of the downstream temperature-measuring resistor Rd caused by heat is larger than that of the upstream temperature-measuring resistor Ru. The flow sensor measures the flow rate of fluid using this difference in change of resistance value between the temperature-measuring resistors Ru, Rd.

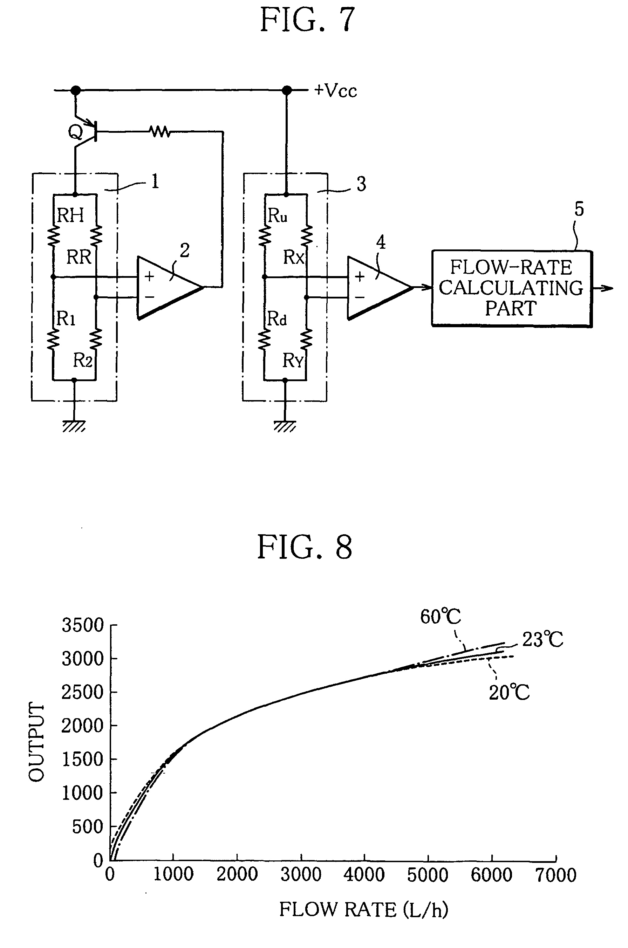

When flow rate is measured using this type of flow sensor, it is important to keep the heating value of the heating resistor RH constant irrespective of change in ambient temperature. Conventionally, the heating value of the heating resistor RH is controlled to be constant in the manner shown in FIG. 7, for example. Specifically, a bridge circuit 1 is formed using a heating resistor RH, a reference resistor RR for measurement of ambient temperature, and a pair of fixed resistors R1, R2. Voltage Vcc supplied from a power source such as a battery is applied to the bridge circuit 1 through a transistor Q, bridge output voltage of the bridge circuit 1 is obtained by a differential amplifier 2, and the transistor Q is feedback-controlled so that the bridge output voltage will be zero. To sum up, by designing a drive circuit so that it will adjust bridge drive voltage applied to the bridge circuit 1 (voltage applied to the heating resistor RH), the heating value of the heating resistor RH is kept constant.

The pair of heat-measuring resistors Ru, Rd arranged on both sides of the heating resistor RH form a bridge circuit 3 for measurement of flow rate with a pair of fixed resistors Rx, Ry. Bridge output voltage of the bridge circuit 3 which varies depending on change in resistance value of the heat-measuring resistors Ru, Rd is detected by a differential amplifier 4. These elements form a sensor body. Under the particular condition that the heating value of the heating resistor RH is kept constant by the drive circuit, a flow-rate calculating part 6 obtains the flow rate of fluid which flows along the sensor body, from the output of the sensor body (bridge output voltage) detected by the differential amplifier 4.

The pair of heat-measuring resistors Ru, Rd of the sensor body show change in resistance value depending on the temperature of fluid. The fluid flowing along the heat-measuring resistors Ru, Rd varies the quantity of heat which is emitted from the heating resistor RH and affects the heat-measuring resistor Rd (quantity of transmitted heat), in a manner depending on its flow rate. Here, the quantity of affecting heat does not vary uniformly with change of the flow rate. Thus, the output of the sensor body shows a variation characteristic as shown in FIG. 8, for example. In addition, the variation characteristic varies under the influence of ambient temperature. Particularly when the flow rate is high, for example 5000 L (liters) per hour or higher, the variation characteristic of the sensor output relative to the flow rate varies.

In order to compensate for the ambient-temperature dependency of the sensor body, it is conceivable to measure ambient temperature, for example by providing a temperature sensor, and correct the sensor output on the basis of the measured ambient temperature. Another conceivable measure is to correct the drive voltage for the heating resistor RH, which is originally controlled depending on ambient temperature, further on the basis of the ambient temperature, to thereby change the heating value of the heating resistor.

However, these measures have a drawback that they make the structure unduly complex. Another drawback is that addition of a temperature sensor, a correction circuit and/or the like increases power consumption.

**Disclosure of the Invention**

An object of the invention is to provide a flowmeter of simple structure which can measure the flow rate of fluid with high accuracy, without being affected by ambient temperature or the flow rate. A specific object of the invention is to provide a flowmeter which can measure the flow rate of fluid with high accuracy even when the flow rate is high.

In order to achieve these objects, a flowmeter according to the invention has basically a heating resistor, and first and second temperature-measuring resistors arranged in a passage for fluid, upstream and downstream of the heating resistor, respectively, and comprises

(a) a sensor body for detecting a flow rate of the fluid from difference in resistance value between the first and second temperature-measuring resistors produced when the heating resistor is made to emit a predetermined quantity of heat,

(b) a bridge circuit including the heating resistor, a reference resistor for measurement of ambient temperature, and a pair of fixed resistors, one of the fixed resistors being series-connected to the heating resistor and the other being series-connected to the reference resistor,

(c) a heating-resistor drive circuit for applying a predetermined bridge drive voltage between a point of the bridge circuit at which the heating resistor and the reference resistor are connected together and an opposite point of the bridge circuit at which the two fixed resistors are connected together, and controlling the bridge drive voltage so that difference between bridge output voltages produced at the two fixed resistors will be zero, and

(d) an arithmetic means for calculating an ambient temperature affecting the reference resistor on the basis of the bridge drive voltage and the bridge output voltage, and correcting the flow rate obtained by the sensor body on the basis of the ambient temperature.

Specifically, it may be so arranged that the arithmetic means obtains a resistance value R of the reference resistor at the ambient temperature TQ on the basis of the bridge drive voltage Vin and the bridge output voltage Vout according to a formula

$$R = Rref[1+\alpha(TQ-T)]$$
$$= (Vin-Vout)/(Vout/Rconst),$$

where Rref is a resistance value of the reference resistor, for example at a reference temperature T, $\alpha$ is a temperature coefficient of the reference resistor and Rconst is a resistance value of the fixed resistors, and calculate the ambient temperature TQ affecting the reference resistor using the obtained resistance value R.

It may so arranged that the flow rate of the fluid detected by the sensor body is corrected on the basis of the ambient temperature TQ affecting the reference resistor obtained from the bridge drive voltage Vin and the bridge output voltage Vout, and a rate of change due to temperature per unit temperature $\Delta P$ corresponding to the flow rate of the fluid detected by the sensor body.

**Brief Description of the Drawings**

FIG. 1 is an illustration showing structure of a sensor part of a flowmeter according to an embodiment of the invention,

FIG. 2 is a schematic block diagram showing a flowmeter according to an embodiment of the invention,

FIG. 3 is a graph showing how the rate of change of sensor output per unit temperature $\Delta P$ varies depending on flow rate,

FIG. 4 is a graph showing how the rate of change of sensor output varies with temperature,

FIG. 5 is a diagram schematically showing the process performed by an arithmetic processing part to make temperature correction to sensor output,

FIG. 6 is an illustration for explaining the basic structure of a flow-rate detecting device (flow sensor) and the principle of measurement by it,

FIG. 7 is a schematic block diagram showing a conventional flowmeter, and

FIG. 8 is a graph showing a variation characteristic of a sensor-body output relative to flow rate.

**Best Mode of Carrying out the Invention**

Referring to the drawings, a flowmeter according to an embodiment of the invention will be described.

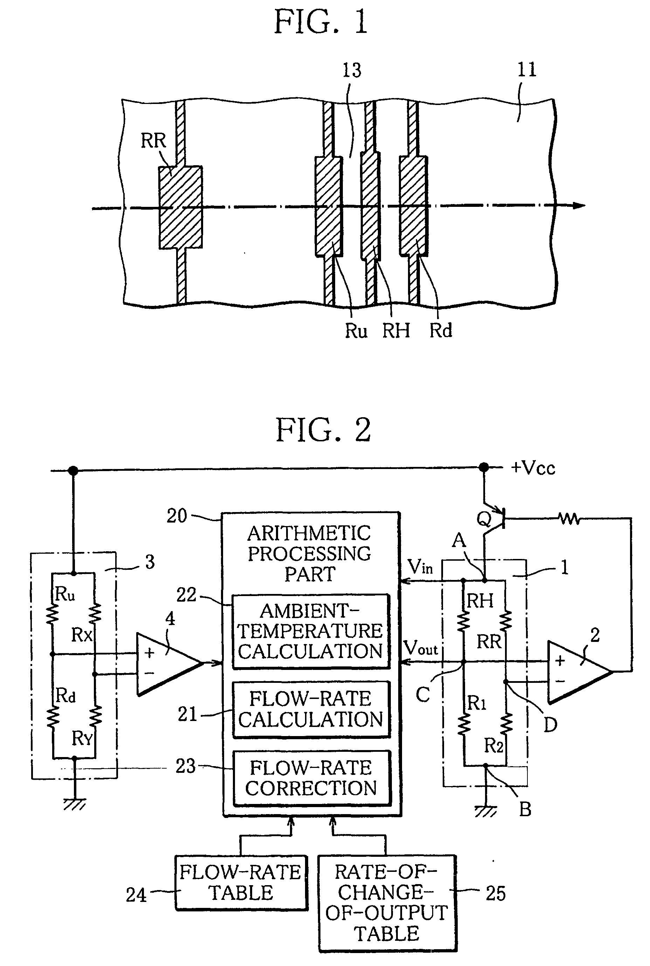

This flowmeter (flow sensor) is suitable for measuring fuel gas supply, for example. As shown in FIG. 1, for example, a sensor part of the flowmeter is formed by arranging, in a central part 13 of a square silicon substrate 11 of 1.7mm or so on a side, a first temperature-measuring resistor Ru, a heating resistor RH, and a second temperature-measuring Rd in the direction of flow of fluid in this order with a predetermined space between. The resistors RH, Ru, Rd are thin film resistors of platinum (Pt) or the like. Fluid (for example fuel gas) of which the flow rate should be measured flows along the surface of the silicon substrate 11. As a result, the fluid changes the temperature distribution in the vicinity of the central part 13 produced by heat emitted by the heating resistor RH. The fluid exerts thermal influence particularly on the downstream temperature-measuring resistor Rd, in a manner depending on its flow rate.

In a peripheral part of the silicon substrate 11, for example an upstream part in the direction F of flow of the fluid, a reference resistor RR for ambient-temperature measurement is arranged. Further, on an external substrate (not shown), there are arranged fixed resistors R1, R2 for forming a bridge circuit 1 for control of drive voltage for the heating resistor RH, and fixed resistors Rx, Ry for forming a bridge circuit 3 for flow-rate measurement with the first and second temperature-measuring resistors Ru, Rd.

FIG. 2 schematically shows the structure of the flowmeter using the resistors formed on the silicon substrate 11 in the above-described manner. The flowmeter according to the present embodiment includes a bridge circuit 3 for flow-rate measurement formed to include the pair of temperature-measuring resistors Ru, Rd arranged on both sides of the heating resistor RH, and the pair of fixed resistors Rx, Ry. Bridge output voltage of the bridge circuit 3 which varies depending on change in resistance value of the temperature-measuring resistors Ru, Rd is detected by a differential amplifier 4. The differential amplifier 4 and the bridge circuit 3 form a sensor body of the flowmeter.

A drive circuit for the heating resistor RH includes a bridge circuit 1 in which an end of the heating resistor RH and an end of the reference resistor RR for ambient-temperature measurement are connected together, an end of the fixed resistor R1 and an end of the fixed resistor R2 are series-connected to the other end of the heating resistor RR and the other end of the reference resistor RR, respectively, and the other end of the fixed resistor R1 and the other end of the fixed resistor R2 are connected together. To the bridge circuit 1, voltage Vcc supplied from a power source such as a battery is applied through a transistor Q. A differential amplifier 2 obtains bridge output voltage of the bridge circuit 1, and the output of the differential amplifier 2 is fed back to the transistor Q so that the bridge output voltage will be zero. By this feedback control through the transistor Q, bridge drive voltage applied to the bridge circuit 1 (voltage applied to the heating resistor RH) is adjusted.

More, specifically, a nodal point A at which the heating resistor RH and the reference resistor RR are connected together is connected to the power supply voltage Vcc through the transistor Q. A nodal point B of the bridge circuit 1 at which the fixed resistors R1, R2 are connected together is grounded. Potential difference produced between a connection point (nodal point C) at which the heating resistor RH and the fixed resistor R1 are connected together and a connection point (nodal point D) at which the reference resistor RR and the fixed resistor R1 are connected together is taken out as the bridge output voltage of the bridge circuit 1.

The flowmeter includes an arithmetic processing part (arithmetic means) 20 such as a microcomputer which performs functions such as obtaining the flow rate of fluid flowing along the sensor body, from the bridge output voltage.

The arithmetic processing part (arithmetic means) 20 includes a flow-rate calculating means 21 which obtains the flow rate of fluid flowing along the sensor body basically by detecting the output of the sensor body (bridge circuit 3 for flow-rate measurement), namely the output voltage of the differential amplifier 4. The arithmetic processing part 20 also includes an ambient-temperature calculating means 22 for calculating (detecting) the ambient temperature TQ in which the reference resistor RR is placed. The ambient-temperature calculating means 22 detects voltage at the nodal point A of the bridge circuit 1 which functions as a drive circuit for the heating resistor RH, namely the bridge drive voltage Vin applied to the bridge circuit 1, and voltage Vout at the connection point (nodal point C) at which the heating resistor RH and the fixed resistor R1 are connected together. Using the voltages Vin and Vout, the ambient-temperature calculating means 22 calculates (detects) the ambient temperature TQ as described later.

The arithmetic processing part 20 further includes a flow-rate correcting means 23. The flow-rate correcting means 23 obtains the rate of change due to temperature per unit temperature ΔP corresponding to the flow rate of fluid detected by the sensor body, and makes temperature correction to the flow rate obtained by the flow-rate calculating means 21 on the basis of the ambient temperature TQ obtained by the ambient-temperature calculating means 22 and the rate of change due to temperature ΔP.

It is to be noted that the arithmetic processing part 20 AID-converts the output of the differential amplifier 4 (sensor output voltage V) and the voltages Vin and Vout at the nodal points A and C of the bridge circuit 1, and then takes them in to perform the above processing.

Specifically, the flow-rate calculating means 21 obtains rough (approximate) flow-rate data Pt corresponding to the output of the differential amplifier 4 (sensor output voltage V) on the basis of the relation between the flow rate and the sensor output shown in FIG. 8, specifically, by referring to a flow-rate table 24 which stores a sensor output characteristic at a reference temperature T (for example at a standard ambient temperature 23°C) in particular.

The ambient-temperature calculating means 22 calculates ambient temperature TQ using the resistance value Rref of the reference resistor RR at the reference temperature T and the temperature coefficient α of the reference resistor RR, which are obtained in advance, and using the voltages Vin, Vout at the nodal points A, C obtained in the bridge circuit 1. Specifically, it can be thought that the resistance value R of the reference resistor RR at the ambient temperature TQ varies from the resistance value Rref thereof at the reference temperature T by an amount corresponding to temperature difference (TQ-T) according to the temperature coefficient $\alpha$. Hence, the resistance value R of the reference resistor RR can be represented by a formula

$$R = Rref[1+\alpha(TQ-T)] \tag{1}.$$

At the ambient temperature TQ, the transistor Q brings the bridge circuit 1 to equilibrium, so that the bridge output voltage is zero. In this condition, the voltage between the opposite ends of the reference resistor RR is equal to difference between the voltage Vin at the nodal point A and the voltage Vout at the nodal point C. At this time, a current I flowing through the reference resistor RR is equal to a current I flowing through the fixed resistor R2 having a constant resistance value Rconst. Hence, the resistance value R of the reference resistor RR at the ambient temperature TQ can be represented by a formula

$$R = (Vin-Vout)/(Vout/Rconst) \tag{2}.$$

From the formulas (1) and (2), the ambient temperature TQ, namely, the temperature of the ambience in which the reference resistor RR is placed can be calculated according to a formula

$$TQ = T+\{[(Vin-Vout)/(Vout/Rconst)Rref]-1\}/\alpha.$$

Here, the reference temperature T, the temperature coefficient $\alpha$ of the reference resistor RR, the resistance value Rref of the reference resistor RR at the reference temperature T, and the resistance value Rconst of the fixed resistor R2 are known. Hence, the ambient temperature TQ can be obtained easily only by performing calculation according to the above formula. In other words, the ambient temperature TQ can be obtained without using a temperature sensor.

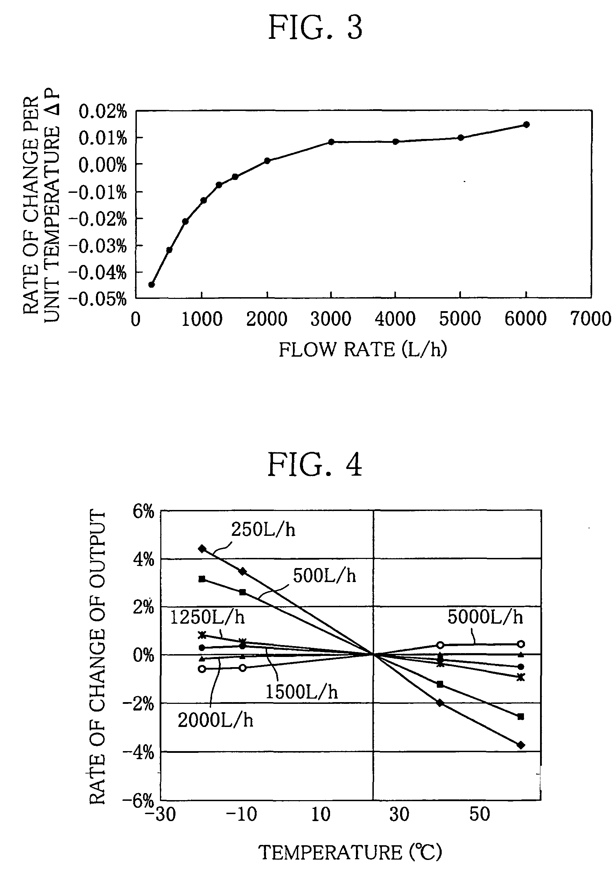

Regarding the relation between the sensor output and the flow rate shown in FIG. 8, it is found that the rate of change of sensor output per unit temperature (for example 1°C) $\Delta P$ shows a tendency (characteristic) shown in FIG. 3 in relation to the flow rate. Let us consider the rate of change of sensor output which varies depending on the flow rate, using the sensor output at the reference temperature (for example 23°C) as a base, for example. Let us suppose that when the flow rate is 2000 L (liters) per hour, the rate of change of sensor output due to ambient temperature is zero. As shown in FIG. 4, the rate of change of sensor output due to ambient temperature varies in the manner depending on the flow rate. Regarding each flow rate, the rate of change of sensor output is almost proportional to change of the ambient temperature.

Hence, the rate of change of sensor output per unit temperature $\Delta P$ has a relation

$$\Delta P = (PQ-P)/(TQ-T),$$

where P is the sensor output at the reference temperature T, and PQ is the sensor output at the ambient temperature TQ. Thus, it is found that the rate of change of sensor output $\Delta P$ has a characteristic as shown in FIG. 3 relative to the flow rate. In other words, between the sensor output PQ at the ambient temperature TQ and the sensor output P at the reference temperature T, there is a relation

$$PQ = P+\Delta P(TQ-T).$$

On the basis of this understanding, in the present flowmeter, a rate-of-change-of-output table 25 storing the rate of change of sensor output per unit temperature $\Delta P$ as shown in FIG. 3 is provided. The flow-rate correcting means 23 refers to the rate-of-change-of-output table 25 to thereby obtain the rate of change of sensor output per unit temperature $\Delta P$ corresponding to the above-mentioned roughly obtained flow rate. The flow-rate correcting means 23 then makes temperature correction to the sensor output PQ obtained at the ambient temperature TQ, using the rate of change $\Delta P$ and the temperature difference (TQ-T) between the ambient temperature and the reference temperature T as follows:

$$P = PQ-\Delta P(TQ-T).$$

By making this temperature correction, the flowmeter compensates for the temperature dependency of the sensor output and obtains the corrected output P. Thus, the flowmeter can obtain the flow rate with high accuracy.

The arithmetic processing part 20 performs the above-described processing on the basis of software, following the steps schematically shown in FIG. 5. Specifically, first, the voltage Vin at the nodal point A and the voltage Vout at the nodal point C of the drive circuit for the heating resistor RH (bridge circuit 1) are AID-converted and taken in [step S1]. Then, the ambient temperature TQ which affects the reference resistor RR is calculated using the voltages Vin and Vout [step S2].

In the meanwhile, the output voltage V of the sensor body comprising the bridge circuit 3 is AID-converted and taken in. By referring to the flow-rate table 24, a rough flow rate PQ corresponding to the sensor output is obtained [step S3]. Then, by referring to the rate-of-change-of-output table 25, a rate of change of sensor output per unit temperature ΔP corresponding to the rough flow rate PQ is obtained [step S4]. Then, temperature correction is made to the rough flow rate PQ, using the rate of change ΔP and the ambient temperature TQ obtained in the above-described manner. As a result, the true flow rate P which is not affected by the temperature or the flow rate is obtained.

As described above, the flowmeter according to the present invention has a function of making temperature correction to the sensor output PQ by obtaining the ambient temperature TQ in the above-described manner and obtaining the rate of change of sensor output per unit temperature ΔP corresponding to the flow rate. Because of this function, the flowmeter can correct the change of output of the sensor body due to temperature, which depends on the flow rate, effectively, without need to incorporate an external element such as a temperature sensor, and thereby improve the accuracy of measurement, sufficiently. Also, it is so arranged that temperature correction to the sensor output is carried out by effectively using the arithmetic processing part 20 for calculating the flow rate from the sensor output. Hence, the flowmeter according to the present invention can be achieved only by modifying execution programs for the arithmetic processing part 20 which are generally provided in conventional flowmeters. This has advantages such that it does not make the structure complex.

The present invention is not limited to the above-described embodiment. For example, in the described embodiment, the flow rate PQ corresponding to the sensor output is obtained by referring to the flow-rate table 24. However, the flow rate PQ may be obtained by using a linear approximation function or like which is given in advance to represent relation between the sensor output and the flow rate. Further, in the described embodiment, the bridge circuit 3 is driven by applying the power voltage Vin to the connection point (nodal point A) at which the heating resistor RH and the reference resistor RR are connected together, and grounding the connection point (nodal point B) at which the fixed resistors R1 and R2 are connected together. However, this arrangement may be the opposite, that is, the drive voltage may be applied to the connection point of the fixed resistors R1 and R2. Further, since the drive voltage Vin and bridge output voltage Vout of the bridge circuit 3 are detected when the bridge circuit 3 is in equilibrium, the voltage Vout at the nodal point D of the reference resistor RR may be detected in place of the voltage Vout at the nodal point C of the heating resistor RH.

The flow-rate measurement range of the sensor body and the like may be determined according to the object of measurement. The flow rate P fed from the arithmetic processing part 20 may be digital data in several bits or serial data in the form of pulses of which the number corresponds to the flow rate. Other various modifications can be made to the present invention without deviating from the gist thereof.

**Industrial Applicability**

As described above, in the present invention, the ambient temperature around the sensor body is obtained without need to incorporate a temperature sensor or the like, and temperature correction is made to the output of the sensor body on the basis of the ambient temperature obtained this way and the rate of change of output of the sensor body per unit temperature corresponding to the flow rate. Thus, flow-rate measurement can be carried out easily and effectively, with high accuracy. Hence, practical advantages of the flowmeter according to the invention are great.

**Claims**

1. A flowmeter having a heating resistor, and first and second temperature-measuring resistors arranged in a passage for fluid, upstream and downstream of the heating resistor, respectively, comprising:

    a sensor body for detecting a flow rate of the fluid from difference in resistance value between the first and second temperature-measuring resistors produced when the heating resistor is made to emit a predetermined quantity of heat,
    a bridge circuit including the heating resistor, a reference resistor for measurement of ambient temperature, and a pair of fixed resistors, one of the fixed resistors being series-connected to the heating resistor and the other being series-connected to the reference resistor,
a heating-resistor drive circuit for applying a predetermined bridge drive voltage between a point of the bridge circuit at which the heating resistor and the reference resistor are connected together and an opposite point of the bridge circuit at which the two fixed resistors are connected together, and controlling the bridge drive voltage so that difference between bridge output voltages produced at the two fixed resistors will be zero, and an arithmetic means for calculating an ambient temperature affecting the reference resistor on the basis of the bridge drive voltage and the bridge output voltage, and correcting the flow rate obtained by the sensor body on the basis of the ambient temperature.

2. The flowmeter according to claim 1, wherein the arithmetic means obtains a resistance value R of the reference resistor at the ambient temperature TQ on the basis of the bridge drive voltage Vin and the bridge output voltage Vout according to a formula

$$R = Rref[1+\alpha(TQ-T)] = (Vin-Vout)/(Vout/Rconst),$$

where Rref is a resistance value of the reference resistor at a reference temperature T, $\alpha$ is a temperature coefficient of the reference resistor and Rconst is a resistance value of the fixed resistors, and calculates the ambient temperature TQ affecting the reference resistor using the obtained resistance value R.

3. The flowmeter according to claim 1, wherein the arithmetic means includes a flow-rate correction means for correcting the flow rate of the fluid detected by the sensor body on the basis of the ambient temperature TQ affecting the reference resistor obtained from the bridge drive voltage Vin and the bridge output voltage Vout, and a rate of change due to temperature per unit temperature ΔP corresponding to the flow rate of the fluid detected by the sensor body.

# FIG. 1

# FIG. 2

# FIG. 3

# FIG. 4

# FIG. 5

```
              START
                │
                ▼
┌──────────────────────────────────┐   S1
│ TAKE IN VOLTAGES Vin, Vout OF     │
│ DRIVE CIRCUIT FOR HEATING         │
│ RESISTOR RH (BRIDGE CIRCUIT 1)    │
└──────────────────────────────────┘
                │
                ▼
┌──────────────────────────────────┐   S2
│ CALCULATE AMBIENT TEMPERATURE     │
│ TQ USING VOLTAGES Vin, Vout       │
└──────────────────────────────────┘
                │
                ▼
┌──────────────────────────────────┐   S3
│ OBTAIN ROUGH FLOW RATE PQ         │
│ CORRESPONDING TO OUTPUT V OF      │
│ SENSOR BODY BY REFERRING          │
│ TO FLOW-RATE TABLE 24             │
└──────────────────────────────────┘
                │
                ▼
┌──────────────────────────────────┐   S4
│ OBTAIN RATE OF CHANGE OF SENSOR   │
│ OUTPUT ΔP CORRESPONDING TO ROUGH  │
│ FLOW RATE PQ BY REFERRING TO RATE-│
│ OF-CHANGE-OF-OUTPUT TABLE 25      │
└──────────────────────────────────┘
                │
                ▼
┌──────────────────────────────────┐   S5
│ MAKE TEMPERATURE CORRECTION       │
│ TO FLOW RATE PQ ON THE BASIS OF   │
│ AMBIENT TEMPERATURE TQ AND RATE   │
│ OF CHANGE OF SENSOR OUTPUT ΔP     │
└──────────────────────────────────┘
                │
                ▼
             RETURN
```

# FIG. 6

# FIG. 7

# FIG. 8

## INTERNATIONAL SEARCH REPORT

| International application No. |
|---|
| PCT/JP02/10087 |

| A. CLASSIFICATION OF SUBJECT MATTER |
|---|
| Int.Cl⁷ G01F1/68 |

According to International Patent Classification (IPC) or to both national classification and IPC

| B. FIELDS SEARCHED |
|---|
| Minimum documentation searched (classification system followed by classification symbols)<br>Int.Cl⁷ G01F1/68 |

| Documentation searched other than minimum documentation to the extent that such documents are included in the fields searched |
|---|
| Jitsuyo Shinan Koho     1922–1996    Jitsuyo Shinan Toroku Koho    1996–2002<br>Kokai Jitsuyo Shinan Koho   1971–2002    Toroku Jitsuyo Shinan Koho    1994–2002 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2001-165734 A (Hitachi, Ltd.),<br>22 June, 2001 (22.06.01),<br>Full text; all drawings<br>(Family: none) | 1–3 |
| A | JP 9-318412 A (Mitsubishi Electric Corp.),<br>12 December, 1997 (12.12.97),<br>Full text; all drawings<br>(Family: none) | 1–3 |

☐   Further documents are listed in the continuation of Box C.     ☐   See patent family annex.

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier document but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 05 December, 2002 (05.12.02) | 17 December, 2002 (17.12.02) |

| Name and mailing address of the ISA/<br>    Japanese Patent Office | Authorized officer |
|---|---|
| Facsimile No. | Telephone No. |

Form PCT/ISA/210 (second sheet) (July 1998)